# EUROPEAN PATENT APPLICATION

(11) **EP 0 763 763 A1**
(43) Date of publication of application: **19.03.1997**
(21) Application number: 96114287.4
(22) Date of filing: 06.09.1996
(51) Int. Cl.: G02B 27/02, H04M 1/72

(54) **Magnifying image display with multi-mode screen**

(30) Priority: 18.09.1995 US 529795
(71) Applicant: MOTOROLA, INC., Schaumburg, IL 60196 (US)
(72) Inventor: Carns, William E., Fountain Hills, Arizona 85268 (US); Wright, Phil, Scottsdale, Arizona 85260 (US); Jachimowicz, Karen E., Laveen, Arizona 85339 (US)
(74) Representative: Hudson, Peter David

(57) **Abstract**

Multi-mode image manifestation apparatus including a real image generator (15) (e.g. an LED array) that provides a real image. An optical system (12) is positioned adjacent the real image generator (15) so as to receive the real image and provide magnified image forming light at an optical output (42). A multi-mode LDC screen (50), defining a plurality of pixels and switchable between a first mode in which the screen forms a direct image from ambient light reflected by the pixels, a second mode in which the screen diffuses light impinging thereon from the image generator (15) to provide a direct view image at a surface thereof and a third mode in which the screen transmits the light from the image generator (15) therethrough to provide a greatly enlarged virtual image.

## Description

### Field of the Invention

The present invention pertains to image manifestation apparatus and more specifically to multi-mode image manifestation apparatus.

### Background of the Invention

With the advent of the communications era, one of the major markets for optical devices is portable electronics equipment, such as cellular telephones, pagers, two-way radios, data banks, computers and the like. Generally, it is desirable that the optical source devices in this type of equipment are compact with low electrical power, inexpensive and include high quality optics with large angular magnification.

Through the use of digital signals which are being transmitted at ever increasing frequencies, it is possible to transmit increasingly larger and more complex messages to remote portable units. Portable communications transceivers and other portable electronic equipment, such as cellular and cordless telephones, pagers, data banks, and tee like, are becoming increasingly popular. In some instances it is possible to send complete messages, including alpha-numerics and/or graphics by way of novel pagers. Thus, complete messages can be sent to specific recipients by way of a pager, telephone, radio, or other communication device, for example.

Also, in many instances it is desirable to provide a visual display on the communication transceiver to supply the operator with an indication of messages received, numbers actually dialed, and other minor but critical information. The problem is that the visual displays on prior art communications receivers are extremely limited in size and require relatively high electrical power as well as a great amount of area to be sufficiently large to produce a useful display. Thus, while the prior art visual displays are generally sufficient for displaying the minor information, they are not capable of displaying large alpha-numeric and/or graphic messages and still being constructed sufficiently small to be incorporated into portable communication devices.

### Prior Art

Several different attempts have been made to provide optical systems for portable electronic devices, one of which includes all refractive or reflective optics with a single line of pixels and a vibrating mirror. The single line of pixels is sequenced through the rows of a raster and, simultaneously, the vibrating mirror scans the line of pixels to properly position each subsequent row in its proper orientation. The problem with this system is the high accuracy of timing required, the amount of power used and the blurring of the ultimate image by the vibrations of the mirror. Also, this system is extremely fragile and not conveniently adaptable to the rough use normally occurring in portable equipment.

The system that is normally used at the present time is one using a large image source and either a direct view image or low magnification optics. The major problem with this system is that it greatly limits the size of the portable electronics on which it is used. Basically, the image must be large enough for an operator to read and/or understand the information being displayed. Thus, for example, if one wanted to display an 8.5" by 11" sheet of paper (a standard letter), the direct view display must be 8.5" by 11" to be easily read. Such a display is clearly too large to be incorporated into most portable electronic devices, such as pagers, two-way radios, cellular phones, data banks, and the like.

It would be highly desirable to devise an optical system with the attributes of being compact and inexpensive, and having the capability of displaying not only small useful messages, such as a number calling, a number being called, etc. but large messages including graphics and alpha-numerics.

It is a purpose of the present invention to provide very small, compact and relatively inexpensive multi-mode image manifestation apparatus.

It is another purpose of the present invention to provide very small, compact and relatively inexpensive multi-mode image manifestation apparatus which is capable of being easily switched between modes.

It is still another purpose of the present invention to provide very small, compact and relatively inexpensive multi-mode image manifestation apparatus which utilizes a single screen, or aperture, for both modes.

It is a further purpose of the present invention to provide, compact and relatively inexpensive multi-mode image manifestation apparatus which is small enough to conveniently fit in portable electronic equipment.

### Summary of the Invention

The above problems and others are at least partially solved and the above purposes and others are realized in multi-mode image manifestation apparatus including a real image generator that provides a real image. An optical system is positioned adjacent the real image generator so as to receive the real image and provide magnified image forming light at an optical output. A multi-mode screen, is provided which is switchable between a first mode in which the screen is divided into a plurality of pixels that are controlled to reflect or transmit ambient light to produce a direct view image, a second mode in which the screen diffuses light impinging thereon from an LED array to provide a direct view image at a surface thereof, and a third mode in which the screen transmits therethrough the impinging light from the LED array to provide a virtual image. The screen is mounted adjacent the optical system so as to provide an image requiring very low electrical power in the first mode, and is mounted to receive the magnified image forming light and provide a directly viewable magnified real image at a surface of the screen in the second mode and a greatly enlarged virtual image in the third mode.

### Brief Description of the Drawings

Referring to the drawings:
FIG. 1 is a view in top plan of image manifestation apparatus employing a single fold optical magnifier;
FIG. 2 is a front view of the apparatus illustrated in FIG. 1;
FIG. 3 is a view in side elevation, portions thereof broken away and shown in section, of the apparatus illustrated in FIG. 1;
FIG. 4 is a simplified block diagram of an image generator associated with the apparatus of FIG. 1;
FIG. 5 is an enlarged view in top plan of an array of light emitting devices, portions thereof broken away, forming a portion of the image generator of FIG. 4;
FIG. 6 is a 4x magnified view in side elevation of the apparatus illustrated in FIG. 1 and including a screen, in accordance with the present invention;
FIG. 7 is a front view of the screen of FIG. 6 illustrating additional details thereof;
FIG. 8 is a view in perspective illustrating a typical direct view as seen by the operator of portable communications equipment employing the image manifestation apparatus of FIG. 6 in a first mode; and
FIG. 9 is a view in perspective illustrating a typical virtual image as seen by the operator of portable communications equipment employing the image manifestation apparatus of FIG. 6 in a second mode.

### Description of the Preferred Embodiments

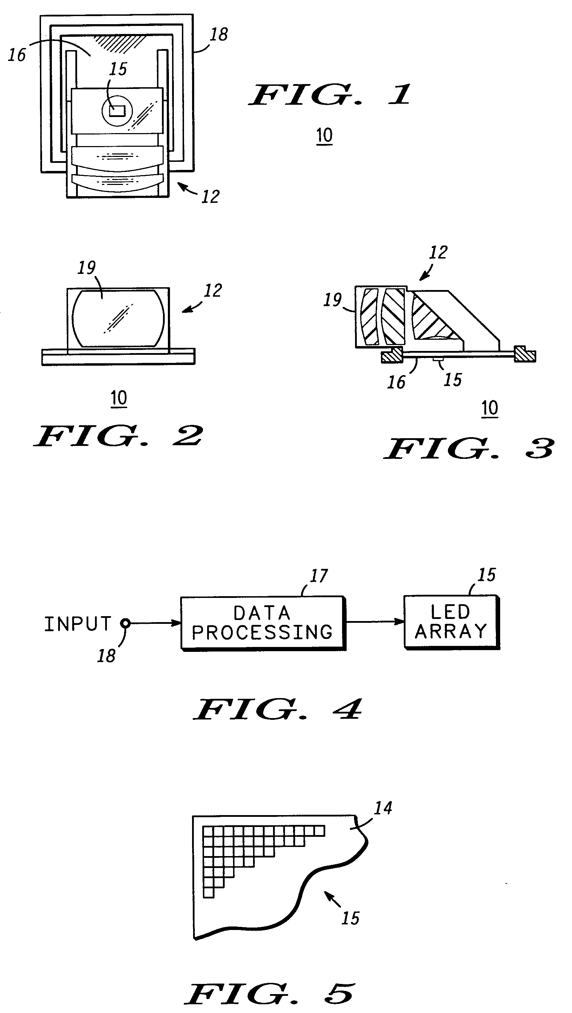

Turning now to the figures, FIGS. 1, 2 and 3 illustrate a top plan view, front view, and side elevation of miniature imagery apparatus 10. Apparatus 10 includes a single fold optical magnifier 12 and an array 15 of light emitting devices, such as organic or inorganic LEDs, field emission devices, vertical cavity surface emitting lasers, LCDs, etc. In this specific embodiment, array 15 includes 144 light emitting devices by 240 light emitting devices. Each light emitting device is fabricated approximately 20 microns on a side with a center-to-center spacing between adjacent devices of no more than 20 microns. Each light emitting device is turned ON with approximately 1.8 volts and utilizes approximately 50µA of current when it is turned ON. Array 15 produces a luminance less than approximately 15 fL. Miniature imagery apparatus 10 is illustrated in FIGS. 1, 2 and 3 approximately the actual size to provide some indication as to the extent of the reduction in size achieved by the present invention.

Array 15 is mounted on the under-surface of a glass substrate 16 and a driver board, etc., (not shown) can be bump-bonded to substrate 16. Additional information on driver boards and bonding of substrates to the driver boards is disclosed in United States Patent No. 5,432,358, entitled "Integrated Electro-optical Package", issued on July 11, 1995 and assigned to the same assignee, which information is included herein by reference.

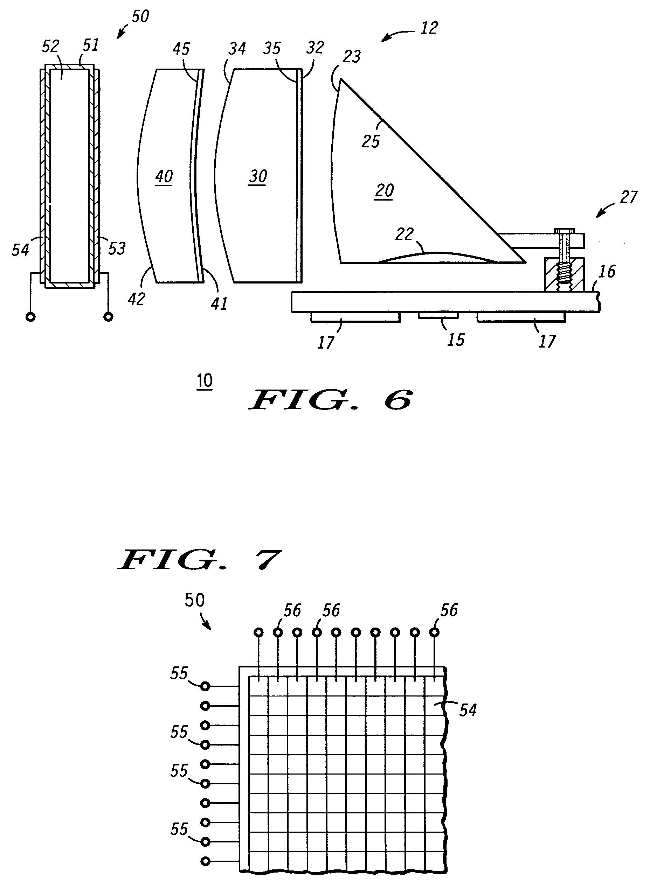

Array 15 is illustrated in more detail in FIG. 4 and includes, for example, semiconductor electronics such as a light emitting device (LED) array 15 driven by data processing circuits 17. The LEDs may be, for example, organic or inorganic light emitting diodes, vertical cavity surface emitting lasers, field emission devices, LCDs, etc. Data processing circuits 17 include, for example, logic and switching circuit arrays for controlling each LED in LED array 15, drivers and the like. Data processing circuits 17 include, in addition to or instead of the logic and switching arrays, a microprocessor or similar circuitry for receiving data at an input terminal 18 and processing the data to produce a desired real image on a device such as LED array 15.

In this specific embodiment LED array 15 is utilized because of the extremely small size that can be achieved and because of the simplicity of construction and operation. Referring specifically to FIG. 5, a plan view of LED array 15 is illustrated in which pixels are formed in a regular pattern of rows and columns on a single substrate (e.g. a semiconductor chip) 14. In one mode of operation, several LEDs (e.g. an 8x8 square) may be operated in parallel as a single pixel to provide more size and illumination. In another mode, each pixel includes one LED, with additional parallel LEDs being included, if desired, for color, additional brightness and/or redundancy. The reason for two modes of operation will be apparent presently.

By addressing specific pixels by row and column in a well known manner, the specific pixels are energized to produce a real image. Digital or analog data is received at input terminal 18 and converted by data processing circuits 17 into signals capable of energizing selected pixels to generate the predetermined real image. The digital or analog data is received from any data source, such as a communication receiver, a memory or data bank, or other portable electronic device, etc.

It will be understood by those skilled in the art that LED array 15 and substrate 14 are greatly enlarged in FIG. 6. Also, while data processing circuits 17 are represented by a separate block, it will be understood that in some applications they may be formed around the edge of array 15 on substrate 14. The actual size of substrate 14 is on the order of a few milli-meters (e.g. 3 to 10) along each side with each LED being on the order of 5 to 50 microns on a side (or in diameter if the LED is round). Because of the extremely small size of substrate 14, drive lines or metal connecting traces between LEDs, have a very small cross-section, which severely limits their current carrying capacity, or current density. Referring to FIG. 5 for example, in one typical operation only a row at a time is addressed or "turned ON". Thus, the metal trace for each column needs to carry only sufficient current for one LED (the one LED in the row which is ON). However, all of the LEDs in the ON row could potentially be turned ON simultaneously. Thus, the metal trace for the ON row, which can potentially be required to carry current for however many LEDs are in the row (e.g. 100 to 1500 LEDs), must carry many times as much current as the column metal traces.

Single fold optical magnifier 12 is also mounted on substrate 16 and includes a plurality of optical elements defining a light path from array 15 to an optical output 19, best seen in FIG. 2. The plurality of optical elements are constructed to angularly magnify images, generated by array 15, at a light inlet of a first optical element by greater than ten in a specific mode of operation, which will be explained in detail presently. In the specific mode of operation, because of the length of the optical path and the size of array 15 (the real image), the horizontal field of view of the optics ranges from approximately 11 degrees at a magnification of 10x to 22 degrees at a magnification of 20x, with the present embodiment having a horizontal field of view of approximately 16 degrees and a magnification of 15x.

Referring specifically to FIG. 6, a 4x magnified view in side elevation of miniature imagery apparatus 10 of FIG. 1 incorporated into multi-mode image manifestation apparatus in accordance with the present invention is illustrated. From this view it can be seen that the plurality of optical elements includes a first optical element 20 having a light inlet 22, a spheric surface serving as a light outlet 23 and directed at an angle to light inlet 22 and a reflecting surface 25 optically positioned between light inlet 22 and light outlet 23 so as to direct light from light inlet 22 to light outlet 23. In this specific embodiment, element 20 is formed as a prism and is molded from optical quality plastic. Generally, it is understood that optical quality plastic is material having a high index of refraction, between approximately 1.5 and 1.6. Reflecting surface 25 may be a separate silvered mirror that is simply molded into element 20, or surface 25 can be silvered after formation of element 20, or surface 25 can be uncoated and used in a total internal reflection mode.

In this embodiment, light inlet 22 takes the form of an aspheric field flattening concave surface molded directly into element 20 and formed as an integral part thereof. It will be understood, however, that light inlet 22 could be formed as a separate lens and subsequently positioned in optical alignment with the lower surface of element 20. Separate components of course result in additional components and assembly steps which can increase the cost and size of the final structure.

Reflecting surface 25 is disposed, with respect to light inlet 22 and light outlet 23, to fold or bend light passing through first element 20 at an angle between approximately 80° to 100°. More specifically, in the embodiment illustrated, light is reflected at an angle of approximately 95°. It has been found, for example, that an angle of 95° avoids vignetting on the lower part of the image at the outlet of optical magnifier 12.

A significant part of the design of first element 20 is the use of a solid, single fold prism with a convex outlet face to enable increased angular magnification (reduced effective focal length) in the same volume of space compared to the use of a simple turning mirror in the air.

The plurality of optical elements further includes an optical lens 30 having a light inlet 32, positioned adjacent light outlet 23 of first optical element 20, and a light outlet 34. In the specific embodiment illustrated, optical lens 30 is a biaspheric optical lens having an aspheric surface defining light inlet 32 and an aspheric surface defining light outlet 34. Optical lens 30 is fixedly mounted relative to first element 20 by any convenient means including an outer housing (illustrated schematically in FIGS. 1 - 3), a mounting frame, or any other convenient structure. The aspheric surfaces, including light outlet 34, light inlet 32, light outlet 23 and field flattening light inlet 22 are designed to reduce and/or eliminate any aberration in wavefront as it passes from light inlet 22 to light outlet 34.

The plurality of optical elements, including first element 20 and optical lens 30, define a light path from light inlet 22 of first element 20 to light outlet 34 of optical lens 30. To fabricate a single fold optical magnifier that is useful in portable electronic devices, the total average optical length of the optical path should be in the range of approximately 15 to 35 millimeters. In this embodiment the optical path from light inlet 22 to the aspheric surface defining light outlet 34 is approximately 20 millimeters. Here it should be noted that because of the very small magnifier 12 and array 15, the overall physical dimensions of apparatus 10 are approximately 1.5 inches (3.8 cm) wide by 0.75 inches (1.8 cm) high by 1.75 inches (4.6 cm) deep, or a total volume of approximately 2 cubic inches (32 cm³), of which less than 0.7 cubic inches is the optic volume.

The plurality of optical elements, including first element 20 and optical lens 30, are constructed to include at least one diffractive optical element positioned in the light path so as to provide additional, primarily chromatic (in this embodiment), aberration correction. In the embodiment illustrated, a diffractive optical element 35 is incorporated into the aspheric surface defining light inlet 32. It will of course be understood that diffractive optical elements can, instead or in addition to, be included in any other surface of the plurality of elements in optical magnifier 12. If a diffractive optical element is included in a surface that is substantially normal to the light path, as opposed to those in which the light strikes the surface at an angle, the diffractive optical element is somewhat easier to construct because of rotational symmetry, whereas surfaces on which light strikes at an angle have nonrotational symmetry. Because the aspheric surfaces and diffractive optical element 35 make lens 30 relatively complex, it has been found that fabrication of optical lens 30 is best done by injection molding.

While first element 20 and lens 30 can be constructed to form a complete magnifier, in this specific embodiment, a low power optical lens 40 is included as an example of possible extensions of the magnifier. Optical lens 40 includes a spheric surface 41 which defines a light input and a spheric surface 42 which defines a light output. Also, surface 41 has a diffractive optical element 45 formed in the surface 41 to provide additional aberration correction. Optical lens 40 is mounted adjacent optical lens 30 and forms an outlet optical element that defines an aperture through which light for forming an angularly magnified image emanates. The addition of optical lens 40 may add somewhat to the size and complexity of magnifier 12, but provides some angular magnification and aberration correction that reduces the complexity of the various other elements, which can in many applications reduce the overall cost of magnifier 12.

A multi-mode screen 50 is positioned adjacent the optical output of magnifier 12 so as to receive magnified image forming light from magnifier 12. Screen 50 is constructed with transparent housing 51 having a central cavity 52 therein. In some applications it may be desirable to construct the front portion and the rear portion of housing 51 with sufficient optical material (e.g. glass, optical plastic, etc.) to provide a desired lens function. As, for example, screen 50 might replace optical lens 40 in the present embodiment.

A thin, optically clear, conductive layer 53 of material is positioned on the inner surface of screen 50 and the outer surface has a similar thin, optically clear, conductive layer 54 of material thereon. Any optically clear conductive material, such as indium-tin-oxide (ITO), very thin metals, certain conductive polymers, etc. can be used in the formation of layers 53 and 54. Layers 53 and 54 are electrically separated from each other and are adapted to have an electrical potential source connected thereto through an external circuit represented by terminals 55 and 56, respectively. When an electrical potential is connected to layers 53 and 54 through terminals 55 and 56, an electrical field is created therebetween across cavity 52.

Referring specifically to FIG. 7, screen 50 is depicted in a simplified view to illustrate additional features of layers 53 and 54. Transparent conductive layer 53 is patterned to form electrically separated rows of conductive material (not shown) with each row being individually addressable through an associated one of a plurality of external terminals 55. Transparent conductive layer 54 is patterned to form electrically separated columns of conductive material with each column being individually addressable through an associated one of a plurality of external terminals 56. In this simplified embodiment each area of screen 50 defined by a cross-over of a row of layer 53 and a column of layer 54 forms a pixel.

Cavity 52 is filled with a liquid crystal material, which may be, for example, a polymer dispersed liquid crystal material (PDLC) or any other material that performs the same function. The liquid crystal material includes a plurality of liquid crystals which, when properly energized, align themselves to transmit light therethrough, when partially de-energized realign themselves, at least partially randomly, to produce a diffuse or translucent effect, and when completely de-energized produce a substantially completely reflecting surface. Thus, the liquid crystal material and, consequently, switchable screen 50, has several conditions or modes of operation: a mode in which the liquid crystal material is completely randomly aligned so as to be substantially completely reflective, a mode in which the liquid crystal material is randomly aligned or diffuse, and another mode in which the liquid crystal material is transparent.

It should be understood that many variations of the energization scheme are possible including: removing the potential from across the liquid crystal material to make it transparent; applying a different potential across the liquid crystal material to make it translucent; applying different potentials in all three modes, etc. Also, the rows and columns (or pixels defined thereby) formed in conducting layers 53 and 54, respectively, may be realized in many different forms and embodiments and the specific embodiment illustrated is only for purposes of facilitating this explanation. For example, multi-mode screen 50 may also be a plurality of liquid crystal layers, or a combination of liquid crystal layers with an optical filter, specifically a partially reflecting, partially transmitting mirror, in order to optimize the multi-mode optical performance.

In many applications it may be desirable to include apparatus for focusing the final image. To this end, element 20 (and the other elements to be described, if desired) is mounted on substrate 16 by means of a threaded adjustment 27 which can be rotated by a thumb screw, screwdriver, etc., to move the fixed assembly of elements 20, 30, 40 and 50 vertically toward and away from substrate 16 and array 15, or vice versa. Focusing is accomplished by simply changing the distance between light inlet 22 and the image generated on array 15. Because the amount of movement will be so small, in many applications it may not be necessary or desirable to move screen 50.

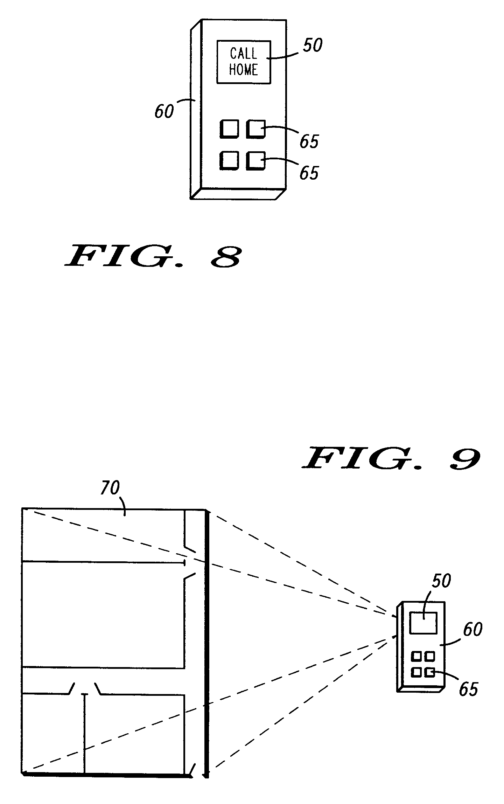

The multi-mode image manifestation apparatus, including single fold optical magnifier 12, along with multi-mode screen 50, array 15 and data processing circuits 17, all mounted on substrate 16, is incorporated into electronic equipment 60, as illustrated in FIG. 8. Screen 50 is the only portion of the multi-mode image manifestation apparatus which is visible in the housing of electronics equipment 60. Several manual controls 65 are provided on the housing of electronics equipment 60 to operate the equipment and to change modes of operation of the multi-mode image manifestation apparatus.

First and second modes of operation of the multi-mode image manifestation apparatus are illustrated in FIG. 8. In the first mode of operation, layers 53 and 54 are divided into rows and columns to form pixels which can be either transparent or reflective. In high ambient light conditions a transparent pixel appears dark (light simply passes into the apparatus) and a reflective pixel appears illuminated. Thus, the individual pixels are addressed to produce a desired image, e.g. generally a simple message or other use of alpha-numerics. In this mode, array 15 is turned off and data processing circuits 17 are used to address individual pixels. Because many of the pixels have no power applied and because no light emitting devices or the like are required, this mode is not only adaptable to high ambient light conditions, it also requires relatively low operating power.

In the second mode of operation, a proper potential is applied to all of terminals 55 and 56, simultaneously, so that the entire area of screen 50 is translucent or diffuse and diffuses the image forming light impinging thereon from magnifier 12 to provide an image at a surface thereof. In this mode of operation the image produced on the surface of screen 50 is a direct view image and can be no bigger than screen 50. Because of the limited size, the messages, or images, produced should be limited to very short messages, such as telephone numbers, certain canned messages that can be tailored to fit the small screen (e.g. "Call home."), etc. Also, because array 15 produces the light for this mode, the multi-mode image manifestation apparatus can be used in very low ambient light conditions when operating in this mode.

Also, in this mode of operation data processing circuits 17 and array 15 may be switched to the mode of operation in which each pixel includes several LEDs, described above. Because direct view images generally require more illumination to be easily viewed in ambient light, including more LEDs in each pixel will increase the illumination and, the brightness. Further, including several LEDs in each pixel will increase the size of the pixel so that less magnification is required to produce a viewable image on screen 50.

A third mode of operation of the multi-mode image manifestation apparatus is illustrated in FIG. 9. In this mode of operation, a proper potential is applied to all of terminals 55 and 56 of screen 50, simultaneously, so that the entire area of screen 50 is a transparent window (or a lens in some applications) in which the screen transmits the impinging light from magnifier 12 therethrough, and the image viewed is a greatly enlarged virtual image 70, (e.g. a 8.5 by 11 image of alpha-numerics and/or graphics) which appears to the viewer to be behind electronics equipment 60. Because the image is focused at the eye of the operator (beyond screen 50), instead of at the surface of screen 50, a greatly enlarged virtual image appears, rather than a direct view image. As an example, image 70 is a floor plan of a building, such as a building about to be entered by the operator (a policeman or a fireman). The floor plan is on file at the police/fire station and, when assistance is requested by the policeman or fireman, the station simply transmits the previously recorded plan. Similarly, electronics equipment 65, in the second mode, might be utilized to receive and/or store pictures of missing persons or wanted criminals, maps, extremely long messages, etc.

Because the images for all three modes of operation are viewed in the same aperture, there is no confusion on the part of the operator. Also, the single aperture reduces the required area on the housing of electronics equipment 60 for the image manifestation apparatus. In a typical example, an operator will simply view screen 50 while dialing the telephone (assuming equipment 60 is a telephone) to ensure the number he dialed is correct. If the operator is in a high ambient light condition he will use the first mode and if he is in a low ambient light condition he will use the second mode. The operator can then, while still viewing screen 50, simply switch to the third mode of operation to receive large alpha-numeric and/or graphic messages on equipment 60. Because the third mode is a virtual image protected from ambient light by magnifier 10, the third mode of operation performs equally well in high or low ambient light conditions. Also, because the operator views screen 50 in all modes of operation, confusion as to where to look and what to look at is greatly reduced.

It should be understood, however, that all three modes of operation may not be desired in specific apparatus or in specific applications. Therefore, it will be understood by those skilled in the art that at least some of the three modes of operation are optional and it is fully intended that various combinations of the three modes may be incorporated for various applications in electronic apparatus.

Thus, multi-mode image manifestation apparatus with the attributes of being compact and inexpensive, has been disclosed. Further, the disclosed multi-mode image manifestation apparatus is highly versatile and can be used under widely varying ambient light conditions. Because of its novel construction, magnifier 12 can be manufactured very small, with high angular magnification and very inexpensively. Also, screen 50 is relatively inexpensive to manufacture and is inexpensive to incorporate into electronics equipment 60. Further, because of the small size, high angular magnification and rugged construction of magnifier 12 and array 15, magnifier 12 and array 15 can be used in conjunction with multi-mode image manifestation apparatus which can in turn be incorporated into virtually any portable electronics equipment.

While we have shown and described specific embodiments of the present invention, further modifications and improvements will occur to those skilled in the art. We desire it to be understood, therefore, that this invention is not limited to the particular forms shown and we intend in the appended claims to cover all modifications that do not depart from the spirit and scope of this invention.

## Claims

1. Multi-mode image manifestation apparatus characterized by:
real image generation means (15) for providing a real image;
a magnifying optical system (12) positioned adjacent the real image generation means (15) so as to receive the real image at an optical input (22) and provide magnified image forming light at an optical output (42); and
a multi-mode screen (50) switchable between a first mode in which the screen diffuses light impinging thereon to provide an image at a surface thereof and a second mode in which the screen transmits the impinging light therethrough, the screen being mounted in the optical system (12) adjacent the optical output (42) so as to receive the magnified image forming light and provide a directly viewable magnified real image at a surface of the screen in the first mode and a greatly enlarged virtual image in the second mode.

2. Multi-mode image manifestation apparatus as claimed in claim 1 further characterized in that the multi-mode screen (50) includes liquid crystal material (52).

3. Multi-mode image manifestation apparatus as claimed in claim 2 further characterized in that the liquid crystal material (52) includes polymer dispersed liquid crystal.

4. Multi-mode image manifestation apparatus as claimed in claim 1 further characterized in that the real image generation means (15) includes an image generator with a two dimensional array (15) of light emitting devices formed thereon and cooperating to generate a complete real image, the light emitting devices being positioned in rows and columns to define all pixels of the real image.

5. Multi-mode image manifestation apparatus as claimed in claim 4 further characterized in that the two dimensional array (15) of light emitting devices includes a two dimensional array of one of organic light emitting diodes, inorganic light emitting diodes, vertical cavity surface emitting lasers, field emission devices, or liquid crystal devices.

6. Multi-mode image manifestation apparatus as claimed in claim 1 further characterized by a data supplying device (60) connected to the real image generation means (15) for supplying video signals to the real image generation means (15).

7. Multi-mode image manifestation apparatus as claimed in claim 6 further characterized in that the data supplying device (60) includes one of a pager, a two-way radio, a cellular telephone, and a data storage device.

8. Multi-mode image manifestation apparatus as claimed in claim 1 further characterized in that the directly viewable magnified real image at the surface of the screen (50) in the first mode is magnified less than approximately 10x and the greatly enlarged virtual image in the second mode is magnified more than approximately 10x.

9. Multi-mode image manifestation apparatus as claimed in claim 1 further characterized in that the a multi-mode screen (50) is switchable between the first and second modes and a third mode in which the screen (50) is divided into pixels and each pixel is controllable into a reflective and a transparent condition, with individual pixels transmitting ambient light in the transparent condition and reflecting ambient light in the reflective condition.

10. Multi-mode image manifestation apparatus as claimed in claim 1 further characterized by a mounting structure (16) including optically clear plastic material molded into a desired shape with the real image generation means (15) amd the magnifying optical system (12) mounted thereon.
